# EUROPEAN PATENT SPECIFICATION

(11) **EP 2 678 555 B1**
(45) Date of publication and mention of the grant of the patent: **31.05.2017**
(21) Application number: 12707943.2
(22) Date of filing: 22.02.2012
(51) Int. Cl.: F03D 1/02, F03D 3/02, F03D 7/02

(54) **WIND TURBINE WITH TWO ROTORS**
WINDKRAFTANALGE MIT ZWEI ROTOREN
ÉOLIENNE BI-ROTOR

(30) Priority: 22.02.2011 NL 2006276
(43) Date of publication of application: 01.01.2014
(73) Proprietor: Itomforce Innovations B.V., 2931 AH Krimpen a/d Lek (NL)
(72) Inventor: DORELEIJERS, Thomas, Hubertus, Maria, NL-2931 AH Krimpen a/d Lek (NL)
(74) Representative: van Dokkum, Willem Gerard Theodoor
(86) International application number: PCT/NL2012/050104
(87) International publication number: WO 2012/115512

(56) References cited:
- EP-A2- 1 002 949
- EP-A2- 1 253 317
- WO-A1-95/00757
- WO-A1-2008/078342
- WO-A1-2010/098813
- WO-A1-2010/098814
- CN-U- 201 671 770
- DE-A1- 2 620 862
- DE-A1- 4 236 092
- DE-A1- 4 444 757
- DE-U1- 20 217 869
- DE-U1-202009 009 654
- JP-A- 2003 035 249
- JP-A- 2007 211 667
- UA-C2- 79 256
- US-A- 2 177 801
- US-A- 4 039 848
- US-A1- 2008 211 236

## Description

The present invention relates to constructions with wind turbines. The term wind turbine is used here to distinguish these wind turbines from classic windmills.

The invention relates more particularly to a wind turbine comprising a support construction, a first nacelle which is placed on the support construction and in which a first generator is placed, and a first wind turbine rotor adapted for approach flow in axial direction and having a substantially horizontally extending first shaft which is bearing-mounted in the first nacelle and coupled to the first generator.

Such wind turbines are generally known. They are adapted to generate electrical energy. For coupling of this electrical energy to the electricity grid converters are necessary which convert electrical energy generated with specific voltage and frequency by the generator to energy with the frequency and voltage of the electricity grid. This provides the option of optimizing the generator without having to take into account the frequency and voltage of the grid.

Particularly in densely populated countries the number of locations for wind turbines is limited; it is therefore important to use the available locations as well as possible, which means that as much electrical energy as possible must be generated at the available locations. The object of the present invention is to provide a wind turbine with which the greatest possible amount of electrical energy can be generated.

The object is achieved with a wind turbine of the above stated type wherein at least a second wind turbine rotor with a second shaft is placed on the support construction. The prior art examples of a wind turbine configuration having a plurality of rotors are disclosed in DE 26 20 862 A1 or WO 2010/098813 A1. This measure provides the option of increasing the number of wind turbines at a single location, in particular on a single support construction, since the use of more than one wind turbine provides the option of converting more kinetic energy of the wind to kinetic energy of the wind turbine rotor, and thereby to electrical energy.

In accordance with the above, this embodiment also provides a method for placing a wind turbine, comprising the step of placing a support construction adapted to support more than one wind turbine rotor and at least one generator with a power dimensioned for the at least one wind turbine rotor, and subsequently placing on the support construction the at least two wind turbine rotors and the generator to be driven by this wind turbine.

It is noted that the use of more than one wind turbine at a single location has limitations, for instance as a result of the fact that the kinetic energy of an amount of air passing the wind turbine decreases; some of this kinetic energy is transferred to the wind turbine so that only a part of the kinetic energy remains. Only a part of the kinetic energy of the air is therefore available for a second wind turbine placed immediately behind the first wind turbine, so that this second wind turbine can in general generate less energy. It is therefore generally more attractive to modify the design of the first wind turbine in order to increase the available power. This is in many cases not possible or worthwhile as a result of lack of space or other limitations. The advantages of the present invention are particularly manifest in such situations.

Because of their maintenance-free character, use is otherwise preferably made of brushless generators, such as synchronous or asynchronous generators, for generating electrical energy. For the turbine rotor use can be made of two-blade, three-blade or multi-blade rotors.

The placing of wind turbines involves a great deal of paperwork, particularly as a result of the permits required by legislation and other restrictions. In order to reduce this amount of paperwork it is sometimes attractive to provide a pre-existing wind turbine with an additional wind turbine rotor. Assuming that the existing wind turbine complies with all regulations, it is usually possible, without too many permits, to add a second turbine rotor, possibly with a second generator, to the support construction of the existing wind turbine.

A specific embodiment provides for this purpose a method for increasing the power of an existing wind turbine, comprising the step of arranging at least a second wind turbine rotor, and possibly a second generator, on the support construction of the existing wind turbine, whereby the first shaft and the second shaft coincide in a continuous shaft. The power of an existing wind turbine can thus be increased, this of course within the above outlined limitations, without too many problems with regulations.

Although it is possible to couple the second wind turbine rotor to the already present first generator, because of the dimensioning of the generator it is recommended that a second generator is also placed, and that the second wind turbine is connected to the second generator.

According to a first embodiment, the at least second wind turbine rotor is adapted for axial approach flow and the second shaft extends substantially horizontally. A second or a subsequent wind turbine rotor is hereby added so that the overall power of the wind turbine increases. It is noted that in such cases the shafts of both turbine rotors will coincide in a continuous shaft being parallel to the wind direction.

It is noted that the size of the second rotor can be the same as that of the first rotor, although it is equally possible for the diameter of the first wind turbine rotor to be larger than that of the second wind turbine rotor. Other properties of the rotors, such as pitch of the rotor blades and the form of the rotor blades, can also differ or be the same.

It is also recommended that the second wind turbine rotor is adapted for direct approach flow. This reduces investment, simplifies assembly and has the smallest possible visual effect. This embodiment also provides a method wherein the second wind turbine rotor is adapted for direct approach flow and the second wind turbine is placed without air guide means.

A more specific embodiment provides the measure that the first shaft and the second shaft are coupled to the first generator. This measure requires a small investment because use is made of a single generator. This single generator is preferably dimensioned to the power of both turbine rotors. When a second turbine rotor is arranged at a later time, this is less attractive in terms of investment because a new generator would then have to be installed. In order to avoid this, it is possible to suffice with the existing generator dimensioned to the power of the single, already placed wind turbine rotor. Because a wind turbine operates for the majority of the time at less than full power, sufficient power is then available in the generator. Optimum use is no longer possible only when the wind-force is so great that the sum of the power of both wind turbine rotors is greater than the power of the generator.

The latter embodiment can be further defined in that the first wind turbine rotor and the second wind turbine rotor are placed on the same shaft. This greatly simplifies the construction of the whole wind turbine, and in particular the bearing-mounting of the single shaft. A still further simplification results when the generator is also placed on the same shaft.

In a number of the embodiments elucidated here the generator or generators and the shaft are placed in the same nacelle. An alternative example not forming a part of the invention provides the measure that the second shaft is bearing-mounted in a second nacelle and that the second shaft is coupled to a second generator received in the second nacelle. There are therefore two or more nacelles here. This provides the option of placing the nacelles independently of each other so that there is no or hardly any overlap of the wind turbine rotors, and the one rotor does not deprive the other of wind.

According to another example not forming a part of the invention, the first and the second nacelle are connected to the support construction for independent rotation about a substantially vertical axis. This measure provides the possibility of independently determining the angle at which the central axis of the nacelles extends. The direction of the central axis of the nacelles is determined in the first instance by the wind direction, since most benefit is gained from the wind energy when the central axis of the nacelle extends parallel to the wind direction. Since the wind direction will differ little at the relatively short distance at which the nacelles are situated, the direction of the central axes of the nacelles will in practice not differ much either.

In many cases the support construction is formed by a substantially vertically extending tower. For the purpose of arranging a subsequent nacelle having placed therein a generator with associated shaft and turbine rotor.

The nacelle placed at the top of a tower is usually arranged for rotation about a vertical axis in order to be able to follow the wind direction.

Although wind generally moves in horizontal direction along the earth, there are situations in which the wind direction has a component in vertical direction, for instance at the coast. In order to also be able to make optimum use of the wind in such situations, it is attractive for the nacelle to be tiltable about a horizontal shaft extending substantially transversely of the rotation axis. This construction provides the option of allowing the shaft of the nacelle to extend parallel to the wind direction. During rotation of a nacelle about a vertical axis the potential energy of the nacelle will not change; apart from friction losses, it therefore requires no force to rotate the nacelle about its vertical axis. Driving can therefore take place by a wind vane or a part functioning as wind vane. Active driving of the rotation movement is otherwise by no means precluded. During rotation of the nacelle about a horizontal axis the potential energy thereof will however generally change unless the rotation axis passes through the centre of gravity of the nacelle, including generator, shaft and rotor. In the majority of cases a driving is therefore necessary for the rotation. A further embodiment provides for this purpose the measure that the tiltable nacelle is placed on a sub-frame, that the sub-frame is connected by a shaft to the support construction and that a controllable linear drive element is placed between the sub-frame and the support construction at a distance from the shaft. The linear drive element can for instance be formed by a hydraulic or pneumatic cylinder or by a preferably electrically driven screw spindle or combination of a gear rack with a gear wheel.

A downward extending pin is preferably arranged on the sub-frame and the pin can be coupled to a carrier which normally extends substantially horizontally and is connected to the support construction. This greatly simplifies assembly since only the carrier, which is usually not too heavy, need first be connected to the support construction, this connection usually requiring welding work and such time-consuming activities, and the subsequent placing of the nacelle, optionally placed on a sub-frame, can take place quickly. This measure therefore also provides a method wherein the nacelle with the second generator is connected to the support construction by initially connecting a substantially horizontal carrier to the support construction and subsequently placing thereon the nacelle with the second generator.

This embodiment moreover provides the option of the pin and the carrier being formed by a coupling usual in a combination of tractor and trailer and having a disc and a kingpin. These are after all components which are easily obtainable commercially and therefore inexpensive.

The above elucidated embodiments refer in each case to turbine rotors with axial approach flow, this designating that the wind direction extends parallel to the direction of the rotation axis and that the main plane of the rotor extends perpendicularly of the axis. This is the case for the majority of currently applied wind turbines. There are however also wind turbines wherein the approach flow direction extends radially of the rotation axis of the turbine rotor. An example of such a rotor is the so-called Darrieus rotor. It is however also possible to apply turbine rotors of this type wherein the blades are arranged according to a cylinder. According to a preferred embodiment the at least second wind turbine rotor is adapted for radial approach flow and the second shaft extends substantially vertically.

A structurally attractive embodiment is obtained when the second wind turbine rotor is placed under the first wind turbine rotor. This does after all prevent the rotors 'taking the wind out of each other's sails', while the second cylindrical rotor forms a more closed whole and so entails fewer problems in terms of safety; after all, such a rotor has no protruding blades.

Wind is a phenomenon highly susceptible to variation. When generating electrical energy it is desirable that the momentarily generated power is as constant as possible in order to prevent overload of the components of the wind turbine. In order to avoid variations in the power by making the rotation speed of the generator as constant as possible, it is known to apply a flywheel on the shaft. In order to be effective such a flywheel has a large mass, and this results in structural problems. In order to obviate these problems, a further preferred embodiment of the invention proposes that at least one of the generators is provided with an inner stator and an outer rotor. The outer rotor is the rotating part, whereby the mass inertia or the flywheel effect is enhanced without arranging additional mass.

The rotation speed of turbine rotors of wind turbines is relatively low. This is particularly the case for turbine rotors with a blade length of several tens of metres. Electrical generators become smaller and cheaper - while having the same power - at higher rotation speeds. As a result gearboxes are often applied for the purpose of increasing the rotation speed of the turbine rotor so that the generator can be given smaller dimensions. Gearboxes, even when they have a planetary configuration, are susceptible to wear, require much maintenance and are susceptible to overload. In order to avoid these drawbacks another embodiment proposes that at least one of the wind turbine rotors is coupled directly to the rotor of the associated generator. The gearbox is hereby dispensed with, although the generator - with a constant power - must be given larger dimensions. This drawback is tolerated because a substantially maintenance-free construction can hereby be obtained.

According to a final embodiment, the shaft of the first wind turbine rotor is coupled to at least two generators. At first sight this embodiment does not appear very attractive; it is after all cheaper, in the case where power is determined by the turbine rotor, to apply a single generator with a high power than two generators each having a low power. There are nevertheless situations in which it is attractive to apply two generators. These are situations in which the turbine rotor is modified in an existing wind turbine, for instance enlarged or provided with other blades, whereby the power of the turbine rotor is increased. In order to also enable conversion of this increased power to electrical energy at strong wind-force an additional generator can also be placed. This additional generator can be the same as or smaller or larger than the generator already present. This placing is particularly easy when the generator already present is provided with a continuous shaft, so that the added generator can be placed coaxially relative to the generator already present. It may however also be attractive to apply two generators in a wholly new wind turbine, for instance when it is anticipated that the wind-force will only reach high values for short periods of time. A first generator is then always in operation and the second generator only when the wind-force is so great that the power of the first generator is exceeded. Because this second generator then has only a short operating time, a cheaper generator with a lower efficiency can be used for this purpose. The second generator can also be used in situations where the first generator is out of operation, for instance for maintenance or repair purposes.

The present invention will be illustrated by examples hereinbelow on the basis of theaccompanying drawings fig.6,8 & 9. The figures 1-5 & 7 being a mere examples not forming a part of the invention.
Figure 1 is a schematic perspective of a prior art example not forming a part of the invention. drawings, figures 3, 6, 8 - 9; figures 1,2,4,5,7 being exemplary embodiments.
Figure 2 is a schematic side view of a prior art example not forming a part of the invention.
Figure 3 is a schematic side view of a prior art example not forming a part of the invention.
Figure 4 is a schematic front view of a prior art example not forming a part of the invention.
Figure 5 is a schematic side view of a prior art example not forming a part of the invention.
Figure 6 is a schematic side view of an embodiment of the invention;
Figure 7 is a schematic side view in partial cross-section of a prior art example not forming a part of the invention.
Figure 8 is a cross-sectional view of an embodiment of the invention; and
Figure 9 is a cross-sectional view of an embodiment of the invention.

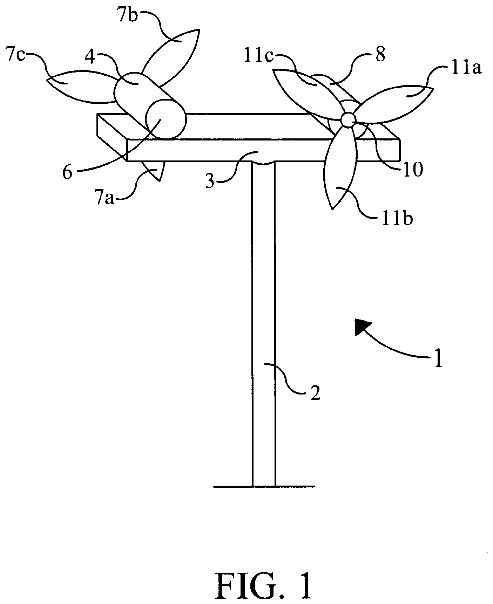

Figure 1 with an embodiment not forming part of the invention shows a wind turbine designated as a whole with 1. Wind turbine 1 comprises a tower 2 which functions as support construction and which takes a substantially smooth, cylindrical, perhaps slightly conical form. It will be apparent that other types of tower can be applied instead, such as lattice towers. A girder 3 is placed on top of tower 2 for rotation about a vertical axis. Girder 3 is embodied as box girder but can also be embodied in other manner, for instance as lattice girder. A first nacelle designated as a whole with 4 is placed on the first end of girder 3. A first generator 5 is placed in the first nacelle 4 and a first rotor shaft 6 is bearing-mounted in first nacelle 4. A first turbine rotor 7 with rotor blades 7a, 7b and 7c is mounted on rotor shaft 6. A second nacelle designated as a whole with 8 is placed on the second end of girder 3. A second generator 9 is placed in the second nacelle 8 and a second rotor shaft 10 is bearing-mounted in second nacelle 8. A second turbine rotor 11 with rotor blades 11a, 11b and 11c is mounted on rotor shaft 10. In the shown embodiment girder 3 is placed symmetrically relative to tower 2, but rotor 11 is placed on the other side of the nacelle. This does after all result in the lowest mechanical load on this girder 3 and on tower 2. An asymmetrical placing which is necessary as a result of lack of space or which is useful is not however precluded.

It will be apparent that the wind drives both turbine rotors 7, 11 in rotation, whereby rotor shafts 6, 10 are driven in rotation. These rotor shafts drive the generators 5, 9 placed in nacelles 4, 8, possibly via a transmission accommodated in nacelles 4, 8. These generators generate electrical energy which is supplied to the customer via a converter which is not shown in the drawing. The converter converts the voltage and frequency which are generated by the generators, and which both vary with the rotation speed, in order to adjust these values to those of the customer, for instance the electricity grid. The converter can be placed in nacelles 4, 8, but can also be placed in the tower or elsewhere. This embodiment is particularly, though not exclusively, suitable for a later increase in the power of the wind turbine. Use is made here of a wind turbine comprising only a tower 2 and, placed directly thereon, a nacelle 4 with generator 5, shaft 6 and rotor 7. In order to increase the power generated by this wind turbine the nacelle 4 and the parts 5, 6 and 7 mounted thereon and therein are removed, after which the girder 3 is placed, as is a bearing allowing a rotation about a vertical axis. The nacelle 4 and a new nacelle 8 are then placed, together with the parts 5, 6, 7, 9, 10 and 11 mounted thereon and therein, after which the configuration shown in figure 1 is obtained.

It is noted that in this embodiment the two rotors do not overlap each other, so that they have no or little influence on each other and there are no or few associated losses. The shafts also extend parallel, which results in an optimal position relative to the wind direction. The rotors also lie, though not necessarily, at the same distance from girder 3.

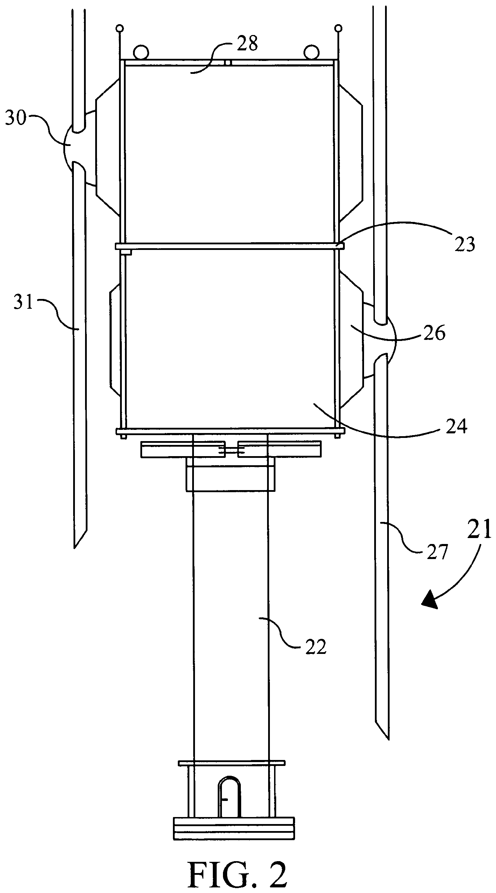

Figure 2 with an embodiment not forming part of the invention shows a wind turbine designated as a whole with 21. This wind turbine comprises a tower 22 on which a support construction 23 is placed. This support construction 23 is connected to tower 22 for rotation as a whole about a vertical axis. Placed in this support construction 23 is a first nacelle 24 in which is placed a generator 25 not shown in the drawing. Also mounted in nacelle 24 is a shaft 26, on the end of which is placed a rotor 27. Placed above the first nacelle 24 in support construction 23 is a second nacelle 28 in which a generator 29, not shown in the drawing, is once again accommodated, while a shaft 30 is bearing-mounted in nacelle 28. Shaft 30 protrudes here from nacelle 28 on the opposite side. A rotor 31 is placed on the end of the shaft. The rotors are thus situated on either side of tower 22. It will be apparent that the respective shafts 26, 30 are coupled to generators 25, 29.

This figure shows that the two nacelles 24, 28 are placed one above the other. This saves a girder 3 as present in figure 1, but entails the drawback that the two rotors 27, 31 lie one behind the other. In other words, the projections of the circles described by rotors 27, 31 largely coincide. Shafts 26, 30 of the two rotors 27, 31 will be turned during operation as parallel as possible to the wind direction in order to gain optimum benefit from the wind. The rotor lying upwind will here be able to extract energy optimally from the wind, but the following rotor will only be able to do so partially because a part of the kinetic energy of the wind has already been absorbed by the rotor lying upwind. The lower kinetic energy is reflected in a lower wind speed. It is also necessary to take into account the wake and the reduction in the wind speed which is caused thereby and which is caused by tower 22 because the second rotor lies downwind of the tower.

In this embodiment rotors 27, 31 have the same diameter and they also have the same blade shape and pitch. It is possible to envisage better results possibly being obtained by a mutually differing diameter, pitch or blade shape. The rotor lying downwind will have to be dimensioned here for a lower wind speed than the rotor lying upwind. It may be attractive in this respect to modify the generator 25, 29 connected to the associated rotor 27, 31 to this difference in terms of power or optimal rotation speed. It is otherwise possible to make allowance for another rotation speed by applying a transmission of different ratio between the shaft and the generator.

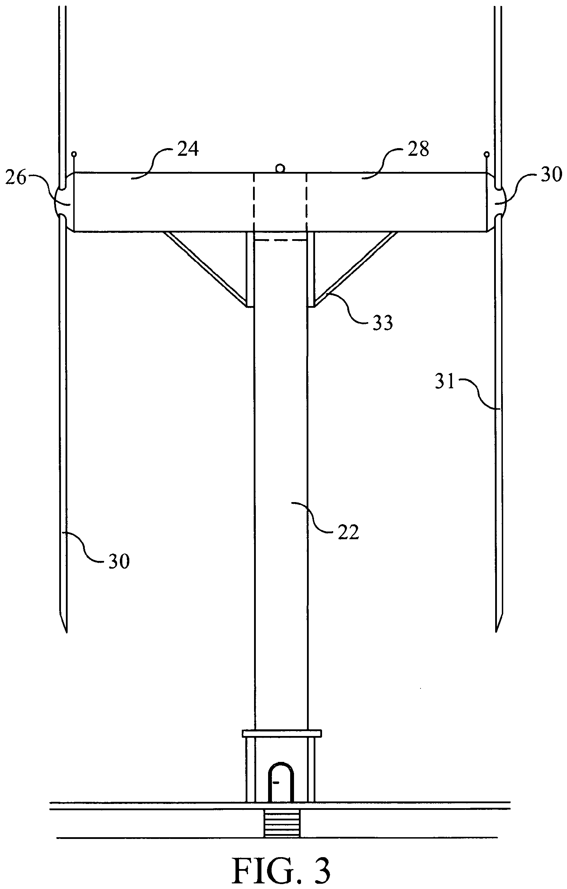

Figure 3 shows an example of prior art largely similar to the embodiment shown in figure 2. The same reference numerals are used in this figure for corresponding parts. This wind turbine 21 comprises a tower 22 on which is placed a support construction 33 which is rotatable about a vertical axis and which differs from support construction 23 of the second embodiment. Two nacelles 24, 28 are placed on this support construction. In contrast to the second embodiment, nacelles 24, 28 are placed at the same height and mutually in line. This embodiment otherwise does not differ, or hardly so, from the second embodiment in respect of generators 25, 29, shafts 26, 30 or rotors 27, 31. There may also be differences in this embodiment between the rotors, generators or transmissions for the purpose of taking into account the upwind or downwind positions of the rotors. This embodiment is also suitable for the purpose of replacing a single wind turbine by a double wind turbine without too much intervention. While the energy output cannot hereby be doubled, it can however be greatly increased.

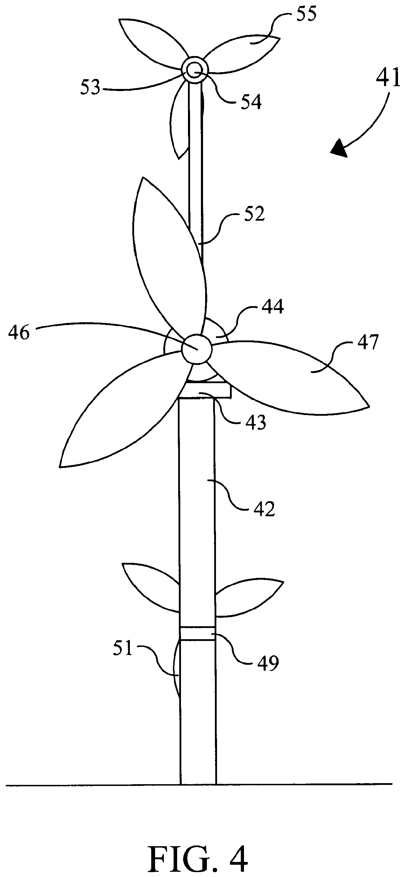

Figure 4 with an embodiment not forming part of the invention shows a wind turbine 41, wherein three turbine rotors are placed on a single carrier, two of these having a smaller diameter. The carrier takes the form of a tower 42 on which a nacelle 44 is placed by means of a rotatable support construction 43. This nacelle 44 is provided in the usual manner with a generator 45, a shaft 46 bearing-mounted therein and a rotor 47 mounted on the end of shaft 46. Up to this point such a wind turbine 41 corresponds to prior art wind turbines.

In order to increase the power generated by wind turbine 41 a second nacelle, not shown in the drawing, is placed on tower 42. This second nacelle has considerably smaller dimensions than nacelle 41. The second nacelle does not therefore extend into tower 42, but second nacelle 48 is mounted on a carrier 49 mounted rotatably on tower 42. A generator is accommodated in the second nacelle and a shaft 50 (not shown) is bearing-mounted in the nacelle, while a turbine rotor 51 is mounted on the end of the shaft. The diameter of this turbine rotor 51 is considerably smaller than that of turbine rotor 47. The second turbine rotor can extract less power from the wind, so that the power of the generator placed in nacelle 49 is correspondingly smaller than that of generator 45 in nacelle 44 at the top of tower 42. It will be apparent that the second nacelle can be placed at a later time against the existing tower 42 so that the original wind turbine 41 can later be provided with an additional turbine rotor 51 and associated generator so that the power of wind turbine 41 as a whole can be increased. In the drawn embodiment the added rotors 51, 55 are placed on the rear side of tower 42 so that the blades of the rotors can overlap each other. The requirement for the situation where the rotors are all placed on the front side, that the circles described by rotors 47, 51 do not overlap, is hereby no longer applicable.

This figure also shows that an auxiliary tower 52 is placed on top of nacelle 44. Auxiliary tower 52 is preferably mounted here on the nacelle so that the auxiliary tower co-rotates with nacelle 44 and the wind direction. Placed at the top of the auxiliary tower is a third nacelle 53 which is provided with a generator, a shaft 54 bearing-mounted in nacelle 53 and a turbine rotor 55 mounted on shaft 54. This turbine rotor 55 is also smaller than turbine rotor 47, and the size thereof can correspond to that of the turbine rotor 51 mounted lower on the tower. The circles described by rotors 47, 55 do not overlap. The third nacelle 53 with the components 54, 55 mounted therein and thereon for generating electrical energy can also be placed at a later time on the existing wind turbine.

This embodiment thus provides two possibilities for increasing the power of an existing wind turbine. It is otherwise possible to add only one of the two turbine rotors. It is then recommended to add the upper rotor since the power thereof, at the same diameter, will be greater than that of the lower one because the wind speed high in the air is greater than that close to the ground. It is also possible - depending on the height of the tower - to mount more than one turbine rotor on the existing tower.

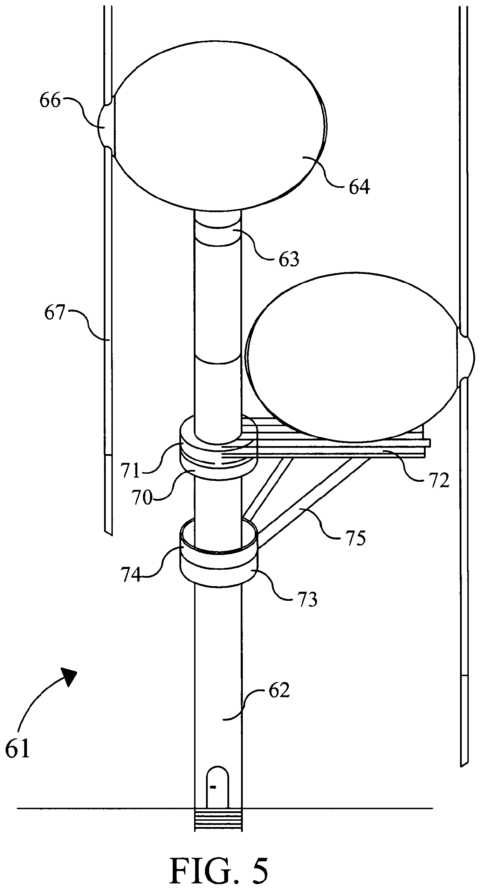

The embodiment not forming part of the invention of the wind turbine shown in figure 5 and designated as a whole with 61 comprises a tower 62 with a nacelle 64 arranged thereon by means of a rotatable bearing 63. This nacelle 64 is also provided with a generator 65, a shaft 66 bearing-mounted therein and a turbine rotor 67 mounted on the end of the shaft. Up to this point this wind turbine 61 corresponds to a prior art wind turbine.

The wind turbine according to the invention is also provided with a first ring 70 arranged fixedly around tower 62. Resting on the first fixedly arranged ring 70 is a first rotatable ring 71, to which is attached a platform 72. Platform 72 is connected for rotation to rotatable ring 71. A second ring 73 is arranged fixedly under the first fixedly arranged ring 70. A second rotatable ring 74 rests on this second fixed ring 73. Platform 72 is provided with two support rods 75 extending obliquely downward from the end of platform 72 remote from tower 62 and connected to the second rotatable ring 74. A support construction connected rotatably to the tower is thus formed by these parts 70-75.

Placed on platform 72 is a second nacelle 74 which is provided in the usual manner with a generator 75, a shaft 76 bearing-mounted in the nacelle and a turbine rotor 77 mounted on the end of the shaft. A wind turbine is thus once again obtained which is provided with two wind turbine rotors. The generated power can hereby be greatly increased, also subject to the wind-force. As a result of the applied construction both turbine rotors are rotatable independently of each other about a vertical axis. Both turbines will in practice lie substantially at the same angle since the wind direction will hardly vary over the short distance between them. Because the turbine rotors partially overlap, the power generated by the rotor located further downwind will be smaller than that of the rotor located further upwind. As in the other embodiments, this construction is also suitable for later placing of the second turbine rotor with the associated components on an existing wind turbine.

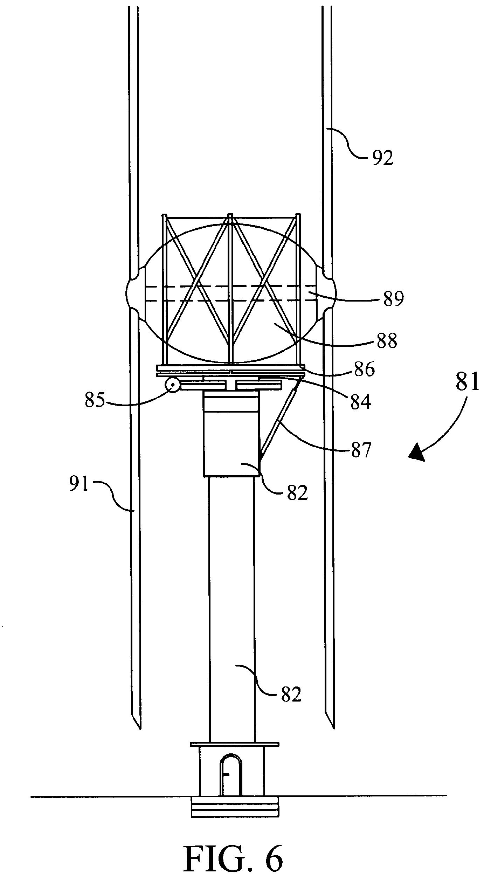

The wind turbine shown in figure 6 and designated as a whole with 81 comprises a tower 82 on which a collar 83 is placed. This collar 83 is connected to tower 82 for rotation about a vertical axis. A frame 84 is connected fixedly to collar 83. A horizontally extending shaft 85 is placed at one end of frame 84 and a sub-frame 86 is connected to frame 84 for rotation about shaft 85. As a result of these measures the sub-frame 86 can tilt about shaft 85 and thereby take up an inclining position. For driving of the tilting movement use is made of a linear drive member 87 such as a hydraulically or pneumatically driven cylinder or a linear electric motor. Arranged on sub-frame 86 is a nacelle 88 in which a shaft 89 is bearing-mounted.

Also arranged in nacelle 88 is an electrical generator 90 which is coupled to the shaft by a gear transmission. It is however also possible for shaft 89 to form the shaft of generator 90 and for the rotor of generator 90 to be placed on shaft 89. A turbine rotor 91, 92 is arranged on the two respective sides of shaft 89.

These measures provide a wind turbine wherein two turbine rotors are connected to the same generator. The generator will of course have to be dimensioned for the purpose of converting the power generated by two wind turbines. Such a combination can nevertheless result in savings, since generators for doubling a determined power are not twice as large as a generator for the determined power. The present configuration also makes an attractive construction possible wherein the rotor of the generator is driven by one of the turbine rotors 91 and the stator of the generator by the other turbine rotor 92. This does of course require a different construction for the stator because it must be rotatably mounted and must also be connected for rotation to turbine rotor 92. It is of course also important for this particular embodiment that the rotation of the rotor and stator is in opposite directions. A difference in speed between rotor and stator is hereby created in generator 90 which is double each of the individual speeds. Using a generator designed for a single turbine rotor, but without giving it a larger form, a power can thus be generated corresponding substantially to double the power. The stator must then of course be made rotatable, which entails a considerable modification of the construction. The measure of the two turbine rotors together driving a single generator can otherwise also be applied without the tilting as discussed below.

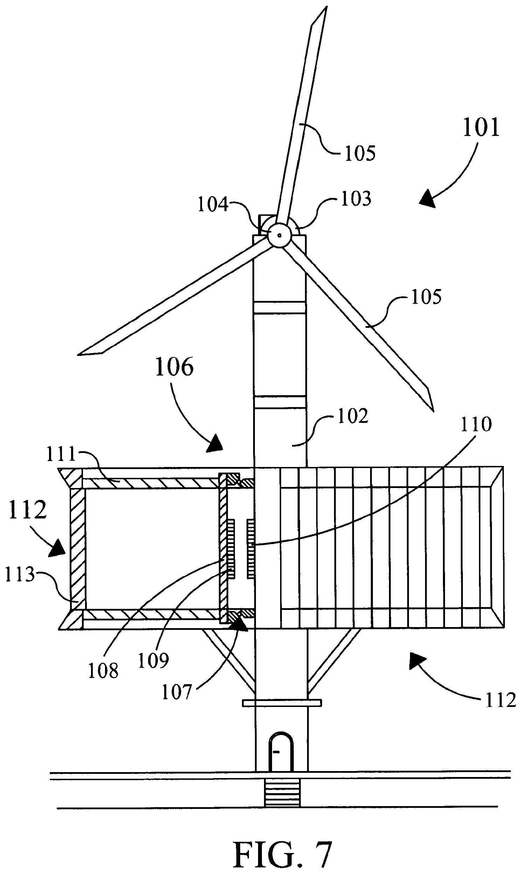

This embodiment also differs in that the whole assembly of sub-frame 87, nacelle 88, shaft 89, generator 90 and turbine rotors 91 and 92 is tiltable about a horizontal axis. The approach flow angle of the turbine rotors is hereby changed, so that it is possible to make allowance for a vertical component of the wind direction. It is noted that this measure can likewise be applied in single wind turbines according to the prior art and also in wind turbines according to the embodiments elucidated above in this document. The exemplary embodiments described up to this point all have turbine rotors wherein the wind direction extends substantially parallel to the shaft of the rotor. This is the most common type of turbine rotor. Figure 7 however shows a seventh embodiment wherein, in addition to the 'normal' rotor, a rotor with radial approach flow is also placed. Such turbine rotors are per se known.

The embodiment not forming part of the invention of the wind turbine 101 shown in figure 7 comprises a tower 102 on which is placed a nacelle 103 with a generator placed therein and a shaft 104 bearing-mounted in the nacelle. A turbine rotor 105 is mounted on the free end of shaft 104. The parts of wind turbine 101 described up to this point form part of the prior art.

Two bearings 106, 107 are mounted extending around tower 102. A cylinder 108 enclosing tower 102 is arranged on both bearings 106, 107. The rotor 109 of a generator is arranged on the inner side of this cylinder 108 and the stator 110 of the generator is placed on the outer side of the tower. Spokes 111 extend radially from the cylinder to a turbine rotor 112 of the type adapted for radial approach flow. Such turbine rotors have a substantially cylindrical structure. As a result of this construction the turbine rotor 112 can rotate around tower 102. Turbine rotor 112 is provided with vertically extending blades 113 which are formed such that a wind striking the turbine rotor 112 with a radial directional component exerts a torque on the turbine rotor and will cause the turbine rotor 112 to rotate.

For the purpose of converting the kinetic energy of the turbine rotor to electrical energy use is made of a generator 109, 110 arranged concentrically round tower 102. The structure of such a generator is such that the rotatable part, the rotor, is situated on the outer side while the stationary part, the stator, is situated on the inner side of the generator. This structure is unusual but is per se known. In a wind turbine of the present type an advantage of such a structure lies in the fact that the rotatable wind turbine encloses the generator, whereby it can easily be connected to the outer rotatable part of the generator. In applications with wind turbines having axial approach flow the advantage of generators with such structures can lie in the greater mass inertia of such a generator, whereby the effect of a flywheel is obtained.

The turbine rotor with a radial approach flow is better suited for placing at low position round a pre-existing tower of a wind turbine since there is hardly any danger of moving blades, as in the case of a turbine rotor with radial approach flow. The size of the turbine can be greatly varied, also subject to local conditions. It is however pointed out that there is generally less wind-force close to the ground.

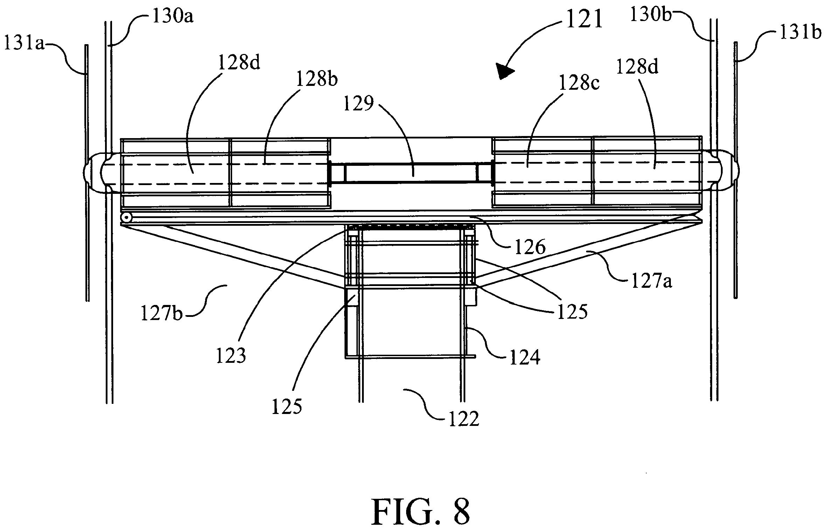

The eighth embodiment of a wind turbine 121 shown in figure 8 comprises a tower 122, on the top of which a thrust bearing 123 is placed. Placed resting on thrust bearing 123 is a substantially cylindrical bush 124 which is closed on its upper side and open on its underside. Placed between the inner side of bush 124 and tower 122 is an annular bearing 125 which transfers the transverse forces on bush 124 to tower 122. Two horizontally extending beams 126 are attached parallel to each other to the upper surface of bush 123. For the purpose of supporting the beams 126 two arms 127a, 127b extend between the casing of bush 124, preferably at the position of annular bearing 125 and the ends of the beams 126. The configuration preferably takes a symmetrical form. Four generators 128a, 128b, 128c and 128d are placed coaxially on both beams 126. A shaft 129 extends through generators 128. A large turbine rotor 130a, 130b and a small turbine rotor 131 a, 131 b are each arranged at both ends of shaft 129. The blades of the large and the small turbine rotor 130, 131 are displaced relative to each other so that the blades are always distributed as uniformly as possible over the circumferential angle. This embodiment can also be provided with a tilting device for the purpose of tilting the shaft of the turbine rotors and generators, as already elucidated in figure 6. Use can also be made in this embodiment of pin and disc constructions as applied in tractors and trailers.

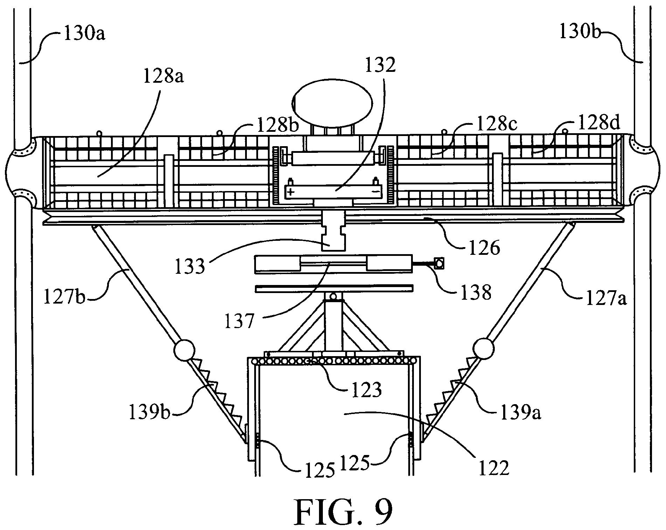

Finally, figure 9 shows an embodiment which differs only in a limited number of measures from the embodiment shown in figure 8. In the first instance the dual turbine rotors of figure 8 are replaced by single turbine rotors 130a and 130b which are both connected to the rotors of generators 128. Placed in the space between generators 128 is an electric motor 132 which can serve to start the rotation of turbine rotors 130.

The greatest differences between the embodiments of figures 8 and 9 lie in the mounting of generators 128 and the beams 126 connected thereto on the supporting construction. For mounting of this assembly forming the nacelle a downward extending pin 133 is arranged on the underside of beams 126. Placed on the upper side of tower 122 as in the embodiment of figure 8 is a thrust bearing 123 having thereon a bush 124 and an annular bearing 125. In contrast to the embodiment of figure 8, a yoke 134 on which a disc 136 is placed for rotation about a horizontal shaft 135 is placed on bush 124. Arranged in disc 136 is an opening 137 in which the pin 133 can be secured. Use is preferably made for this purpose of a combination of disc 136 and pin 133 as known in the transport world for mutual connection of a tractor to a trailer. The pin is referred to here as a kingpin. Such a combination is provided with a locking pin 138 which is connected resiliently to disc 136 and which is urged inward by a spring in order to engage in a groove arranged in pin 133 and thereby lock the pin 133. This embodiment is also provided with arms 127 of a variable length. This variable length is necessary for the purpose of controlling the degree of tilting of the assembly of beams 126 and the generators 128 placed thereon. The length of the arms is made variable by placing a gear rack 139 which can be driven by means of a gear wheel driven by an electric motor. Thus tilting the generators 128 and the turbine rotors 131 mounted thereon makes it possible to adapt the axis of wind turbine rotors 130 to the wind direction when the wind direction is not parallel to the surface of the earth. It is noted here that such a construction need not necessarily be situated per se at the top of a tower; it is likewise possible to provide an existing tower with a spacer and to place the above described construction thereon.

The use of more than one, i.e. four, generators makes it possible to apply standard generators, thereby decreasing the cost price. In the drawn embodiment a space is left clear between the two central generators, this facilitating access to the nacelle, not shown in the drawing, in which the generators are situated. It is noted that the continuous shaft with which the turbine generators are coupled is not essential per se; it is likewise possible to have each of the turbine rotors drive two generators. In another bearing construction a part of the bearing can also be placed between the generators. Nor is it precluded that a part of the space is occupied by a smaller generator which can for instance be adapted to generate exciting current. In this embodiment it is important that the turbine rotors each take a multiple form and that the turbine rotors each drive more than a single generator.

Finally, it will be apparent that measures elucidated on the basis of the above embodiments can be combined with each other and that these embodiments cannot be deemed as being limitative for the scope of protection of the invention, which is defined by the claims.

## Claims

1. Wind turbine (21, 81, 121), comprising a support construction (33), a nacelle (24, 88) which is placed on the support construction and in which a first generator (25, 90, 128a) is placed, and a first wind turbine rotor (27, 91, 130a) adapted for approach flow in axial direction and having a substantially horizontally extending first shaft (26) which is bearing-mounted in the nacelle and coupled to the first generator;
wherein a second wind turbine rotor (31, 92, 130b) with a second shaft (30) is placed on the support construction (33), the second wind turbine rotor is adapted for axial approach flow and the second shaft extends substantially horizontally, wherein the first shaft and the second shaft coincide in a continuous shaft (89, 129);
the nacelle is tiltable about a horizontal axis (85) extending substantially transversely of the continuous shaft, the tiltable nacelle is placed on a sub-frame (86), the sub-frame being connected by the horizontal axis to the support construction and wherein a controllable linear drive element (87) is placed between the sub-frame and the support construction at a distance from the horizontal axis,
**characterized in that** a downward extending pin (133) is arranged on the sub-frame and that the pin is coupled to a carrier which normally extends substantially horizontally and is connected to the support construction.

2. Wind turbine as claimed in claim 1, **characterized in that** the pin and the carrier are formed by a coupling usual in a combination of tractor and trailer and having a disc (136) and a kingpin (133).

3. Wind turbine as claimed in claim 2, **characterized in that** an opening (137) is arranged in the disc (136) in which the pin (133) is secured.

4. Wind turbine as claimed in claim 3, **characterized in that** the disc (136) is provided with a locking pin (138) which is connected resiliently to disc and which is urged inward by a spring in order to engage in a groove arranged in pin and thereby lock the pin.

5. Wind turbine as claimed in any of the foregoing claims, **characterized in that** the support construction comprises a tower (22, 82, 122), a thrust bearing (123) and a cylindrical bush (124), which is closed on its upper side and open on its underside; the thrust bearing being placed on top of the tower.

6. Wind turbine as claimed in claim 5, **characterized in that** between the inner side of bush (124) and tower (122) an annular bearing (125) is provided which transfers the transverse forces on bush to tower.

7. Wind turbine as claimed in any of the foregoing claims, **characterized in that** at least two and preferably four generators (128a, 128b, 128c, 128d) are placed coaxially on the sub-frame, and **in that** the continuous shaft (129) extends through the generators.

8. Wind turbine as claimed in claim 7, **characterized in that** a space is left clear between the two central generators (128b, 128c).

9. Wind turbine as claimed in claim 8, **characterized in that** in the space between the two central generators an electric motor (132) is placed which serves to start the rotation of turbine rotors (130).

10. Method for placing a wind turbine (21, 81, 121) as claimed in any of the foregoing claims, comprising the step of placing a support construction (33) adapted to support more than one wind turbine rotor and at least one generator (25, 90, 128a) with a power dimensioned for the at least one wind turbine rotor (27, 91, 130a), and subsequently placing on the support construction the at least two wind turbine rotors and the generator to be driven by this wind turbine;
the method further comprising the step of arranging at least a second wind turbine rotor (31, 92, 130b) on the support construction of the existing wind turbine, the second wind turbine rotor being adapted for direct approach flow;
a second generator (128d) is also placed, and that the second wind turbine is connected to the second generator;
**characterized in that** the nacelle (24, 88) with the second generator is connected to the support construction by initially connecting a substantially horizontal carrier to the support construction and subsequently placing thereon the nacelle with the second generator.

11. Method as claimed in claim 10, **characterized in that** by means of the downward extending pin (133) being arranged on the sub-frame the second generator (128d) is coupled to the carrier, i.e. disc (136), which extends substantially horizontally and is connected to the support construction.

12. Method as claimed in claim 11, **characterized by** locking the pin (133) into an opening (137) arranged in the disc (136) by engaging a locking pin (138), which is connected resiliently to the disc by a spring, into a groove arranged in pin.

13. Method as claimed in any of the foregoing claims 10 - 12, **characterized by** placing at least two and preferably four generators (128a, 128b, 128c, 128d) coaxially on the sub-frame, and by extending the continuous shaft (129) through the generators, and by placing an electric motor (132) in the space, left clear between the two central generators (128b, 128c), serving to start the rotation of turbine rotors (130).

## Patentansprüche

1. Windturbine (21, 81, 121), umfassend eine Tragekonstruktion (33), eine Maschinengondel (24, 88), die auf der Tragekonstruktion angeordnet ist und in der ein erster Generator (25, 90, 128a) angeordnet ist, und einen ersten Windturbinenrotor (27, 91, 130a), der für eine Annäherungsströmung in axialer Richtung ausgelegt ist und der eine im Wesentlichen horizontal verlaufende erste Welle (26) aufweist, die in der Maschinengondel gelagert und mit dem ersten Generator gekoppelt ist;
wobei ein zweiter Windturbinenrotor (31, 92, 130b) mit einer zweiten Welle (30) auf der Tragekonstruktion (33) angeordnet ist, der zweite Windturbinenrotor für eine axiale Annäherungsströmung ausgelegt ist und die zweite Welle sich im Wesentlichen horizontal erstreckt,
wobei die erste Welle und die zweite Welle in einer durchgehenden Welle (89, 129) zusammenfallen;
die Maschinengondel um eine horizontale Achse (85), die sich im Wesentlichen quer zu der durchgehenden Welle erstreckt, kippbar ist, die kippbare Maschinengondel auf einem Unterrahmen (86) angeordnet ist, der Unterrahmen an der horizontalen Achse mit der Tragekonstruktion verbunden ist und wobei ein steuerbares Linearantriebselement (87) zwischen dem Unterrahmen und der Tragekonstruktion in einem Abstand von der horizontalen Achse angeordnet ist,
**dadurch gekennzeichnet, dass** ein sich nach unten erstreckender Zapfen (133) auf dem Unterrahmen angeordnet ist und dass der Zapfen mit einem Träger gekoppelt ist, der sich normalerweise im Wesentlichen horizontal erstreckt und der mit der Tragekonstruktion verbunden ist.

2. Windturbine nach Anspruch 1, **dadurch gekennzeichnet, dass** der Zapfen und der Träger von einer Kupplung gebildet sind, die bei einer Kombination von Traktor und Anhänger üblich ist und die ein Teller (136) und einen Achszapfen (133) aufweist.

3. Windturbine nach Anspruch 2, **dadurch gekennzeichnet, dass** eine Öffnung (137) in dem Teller (136) angeordnet ist, in der der Zapfen (133) gesichert ist.

4. Windturbine nach Anspruch 3, **dadurch gekennzeichnet, dass** der Teller (136) mit einem Sicherungsstift (138) versehen ist, der elastisch mit dem Teller verbunden ist und der durch eine Feder einwärts gedrängt wird, um in eine an dem Zapfen angeordnete Nut einzugreifen und dadurch den Zapfen zu sichern.

5. Windturbine nach einem der vorhergehenden Ansprüche, **dadurch gekennzeichnet, dass** die Tragekonstruktion einen Turm (22, 82, 122), ein Axiallager (123) und eine zylindrische Buchse (124), die auf ihrer oberen Seite geschlossen und auf ihrer Unterseite offen ist, umfasst; wobei das Axiallager zuoberst auf dem Turm angeordnet ist.

6. Windturbine nach Anspruch 5, **dadurch gekennzeichnet, dass** zwischen der inneren Seite der Buchse (124) und dem Turm (122) ein ringförmiges Lager (125) vorgesehen ist, das die Querkräfte auf die Buchse zum Turm überträgt.

7. Windturbine nach einem der vorhergehenden Ansprüche, **dadurch gekennzeichnet, dass** zumindest zwei und vorzugsweise vier Generatoren (128a, 128b, 128c, 128d) koaxial auf dem Unterrahmen angeordnet sind und, dass sich die durchgehende Welle (129) durch die Generatoren erstreckt.

8. Windturbine nach Anspruch 7, **dadurch gekennzeichnet, dass** ein Raum zwischen den zwei zentralen Generatoren (128b, 128c) freigelassen ist.

9. Windturbine nach Anspruch 8, **dadurch gekennzeichnet, dass** in dem Raum zwischen den zwei zentralen Generatoren ein elektrischer Motor (132) angeordnet ist, der dazu dient, die Rotation von Turbinenrotoren (130) zu starten.

10. herfahren zum Anordnen einer Windturbine (21, 81, 121) nach einem der vorhergehenden Ansprüche, umfassend den Schritt des Anordnens einer Tragekonstruktion (33), die darauf angepasst ist, mehr als einen Windturbinenrotor und zumindest einen Generator (25, 90, 128a) mit einer Leistung, die für zumindest einen Windturbinenrotor (27, 91, 130a) dimensioniert ist, zu tragen und anschließendes Anordnen der zumindest zwei Windturbinenrotoren und des Generators, um von dieser Windturbine angetrieben zu werden, auf der Tragekonstruktion;
das Verfahren umfasst ferner den Schritt des Anordnens zumindest eines zweiten Windturbinenrotors (31, 92, 130b) auf der Tragekonstruktion der bestehenden Windturbine, wobei der zweite Windturbinenrotor auf direkte Annäherungsströmung angepasst ist;
ein zweiter Generator (128d) ebenfalls angeordnet wird und, dass die zweite Windturbine mit dem zweiten Generator verbunden ist;
**dadurch gekennzeichnet, dass** die Maschinengondel (24, 88) mit dem zweiten Generator mit der Tragekonstruktion zunächst durch Verbinden eines im Wesentlichen horizontalen Trägers mit der Tragekonstruktion und anschlie-βendes darauf Anordnen der Maschinengondel mit dem zweiten Generator verbunden ist.

11. Verfahren nach Anspruch 10, **dadurch gekennzeichnet, dass** mittels Anordnung des nach unten weisenden Zapfens (133) auf dem Unterrahmen der zweite Generator (128d) mit dem Träger, d.h. Teller (136), verbunden ist, der sich im Wesentlichen horizontal erstreckt und mit der Tragekonstruktion verbunden ist.

12. Verfahren nach Anspruch 11, **gekennzeichnet durch** Sichern des Zapfens (133) in einer in dem Teller (136) angeordneten Öffnung (137) durch in Eingriff bringen eines Sicherungsstifts (138), der durch eine Feder elastisch mit dem Teller verbunden ist, in eine an dem Zapfen angeordnete Nut.

13. Verfahren nach einem der vorhergehenden Ansprüche 10 - 12, **gekennzeichnet durch** Anordnen von zumindest zwei und vorzugsweise vier Generatoren (128a, 128b, 128c, 128d) koaxial auf dem Unterrahmen und durch Erstrecken der durchgehenden Welle (129) durch die Generatoren und durch Anordnen eines elektrischen Motors (132), der dazu dient, die Rotation der Turbinenrotoren (130) zu starten, in dem Raum, der zwischen den zwei zentralen Generatoren (128b, 128c) freigelassen wird.

## Revendications

1. Turbine éolienne (21, 81, 121), comprenant une construction porteuse (33), une nacelle (24, 88) qui est placée sur la construction porteuse et dans laquelle est placée une première génératrice (25, 90, 128a), et un premier rotor de turbine éolienne (27, 91, 130a) adapté pour un flux d'approche dans une direction axiale et ayant un premier arbre (26) s'étendant sensiblement horizontalement qui est monté sur palier dans la nacelle et couplé à la première génératrice ; dans laquelle un second rotor de turbine éolienne (31, 92, 130b) avec un second arbre (30) est placé sur la construction porteuse (33), le second rotor de turbine éolienne est adapté pour un flux d'approche axial et le second arbre s'étend sensiblement horizontalement, dans laquelle le premier arbre et le second arbre coïncident en un arbre continu (89, 129) ;
la nacelle est orientable autour d'un axe horizontal (85) s'étendant sensiblement transversalement de l'arbre continu, la nacelle orientable est placée sur un sous-cadre (86), le sous-cadre étant raccordé par l'axe horizontal à la construction porteuse et dans laquelle un élément d'entraînement linéaire commandable (87) est placé entre le sous-cadre et la construction porteuse à distance de l'axe horizontal,
**caractérisée en ce qu'**une cheville s'étendant vers le bas (133) est agencée sur le sous-cadre et **en ce que** la cheville est couplée à un support qui s'étend normalement sensiblement horizontalement et est raccordé à la construction porteuse.

2. Turbine éolienne selon la revendication 1, **caractérisée en ce que** la cheville et le support sont formés par un couplage habituel dans une combinaison de tracteur et de remorque et ayant un disque (136) et une cheville d'attelage (133).

3. Turbine éolienne selon la revendication 2, **caractérisée en ce qu'**une ouverture (137) est agencée dans le disque (136) dans laquelle est arrimée la cheville (133).

4. Turbine éolienne selon la revendication 3, **caractérisée en ce que** le disque (136) est pourvu d'une cheville de verrouillage (138) qui est raccordée de manière résiliente au disque et qui est poussée vers l'intérieur par un ressort afin de venir en prise dans une rainure agencée dans la cheville et de verrouiller ainsi la cheville.

5. Turbine éolienne selon l'une quelconque des revendications précédentes, **caractérisée en ce que** la construction porteuse comprend une tour (22, 82, 122), un palier de poussée (123) et une bague cylindrique (124), qui est fermée sur son côté supérieur et ouverte sur son côté de dessous ; le palier de poussée étant placé au sommet de la tour.

6. Turbine éolienne selon la revendication 5, **caractérisée en ce que**, entre le côté interne de la bague (124) et la tour (122), un palier annulaire (125) est prévu, lequel transfère les forces transversales sur la bague vers la tour.

7. Turbine éolienne selon l'une quelconque des revendications précédentes, **caractérisée en ce qu'**au moins deux et de préférence quatre génératrices (128a, 128b, 128c, 128d) sont placées coaxialement sur le sous-cadre, et **en ce que** l'arbre continu (129) s'étend à travers les génératrices.

8. Turbine éolienne selon la revendication 7, **caractérisée en ce qu'**un espace est laissé dégagé entre les deux génératrices centrales (128b, 128c).

9. Turbine éolienne selon la revendication 8, **caractérisée en ce que**, dans l'espace entre les deux génératrices centrales, un moteur électrique (132) est placé, lequel sert à démarrer la rotation de rotors de turbine (130).

10. Procédé pour placer une turbine éolienne (21, 81, 121) telle que revendiquée dans l'une quelconque des revendications précédentes, comprenant l'étape de placement d'une construction porteuse (33) adaptée pour supporter plus d'un rotor de turbine éolienne et au moins une génératrice (25, 90, 128a) avec une puissance dimensionnée pour l'au moins un rotor de turbine éolienne (27, 91, 130a), et de placement ultérieur sur la construction porteuse des au moins deux rotors de turbine éolienne et de la génératrice à entraîner par cette turbine éolienne ;
le procédé comprenant en outre l'étape d'agencement d'au moins un second rotor de turbine éolienne (31, 92, 130b) sur la construction porteuse de la turbine éolienne existante, le second rotor de turbine éolienne étant adapté pour un flux d'approche direct ;
une deuxième génératrice (128d) est également placée, et la seconde turbine éolienne est raccordée à la seconde génératrice ;
**caractérisé en ce que** la nacelle (24, 88) avec la seconde génératrice est raccordée à la construction porteuse en raccordant initialement un support sensiblement horizontal à la construction porteuse et en plaçant ultérieurement sur celle-ci la nacelle avec la seconde génératrice.

11. Procédé selon la revendication 10, **caractérisé en ce que**, au moyen de la cheville s'étendant vers le bas (133) qui est agencée sur le sous-cadre, la seconde génératrice (128d) est couplée au support, c'est-à-dire au disque (136), qui s'étend sensiblement horizontalement et est raccordé à la construction porteuse.

12. Procédé selon la revendication 11, **caractérisé par** le verrouillage de la cheville (133) dans une ouverture (137) agencée dans le disque (136) par la mise en prise d'une cheville de verrouillage (138), qui est raccordée de façon résiliente au disque par un ressort, dans une rainure agencée dans la cheville.

13. Procédé selon l'une quelconque des revendications 10 à 12 précédentes, **caractérisé par** le placement d'au moins deux et de préférence quatre génératrices (128a, 128b, 128c, 128d) coaxialement sur le sous-cadre, et par l'extension de l'arbre continu (129) à travers les génératrices, et le placement d'un moteur électrique (132) dans l'espace, laissé dégagé entre les deux génératrices centrales (128b, 128c), servant à démarrer la rotation des rotors de turbine (130).
